(19) Europäisches Patentamt
European Patent Office
Office européen des brevets

(11) **EP 2 741 220 A1**

## (12) EUROPEAN PATENT APPLICATION

(43) Date of publication:
**11.06.2014 Bulletin 2014/24**

(51) Int Cl.:
***G06F 17/30*** (2006.01)

(21) Application number: **13171279.6**

(22) Date of filing: **10.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.12.2012 US 201213705115**

(71) Applicant: **Linkedin Corporation
Mountain View, California 94043 (US)**

(72) Inventors:
- **Dubey, Sanjay S.
  Fremont, CA California 94555 (US)**
- **Mehta, Nihar N.
  Sunnyvale, CA California 94087 (US)**
- **Rangnekar, Vikram D.
  Mountain View, CA California 94043 (US)**

(74) Representative: **Davies, Simon Robert et al
D Young & Co LLP
120 Holborn
London, EC1N 2DY (GB)**

### (54) Apparatus and method for indexing electronic content

(57)     Apparatus and method are provided for indexing electronic content to be served to users that operate mobile and/or stationary communications and computing devices. An index is composed of multiple slices, with each slice capable of storing multiple entries and each entry representing one content item. A content item's index entry is populated with integer values representing attribute/value pairs of a target audience of the content item. A query or request to identify content items for serving to a particular user is similarly formatted with integers representing attribute/value pairs of the user. Queries can then be executed rapidly across any or all index entries in any or all slices. Within a slice, entries may be sorted by value or score, and integer components within an individual entry may be sorted to facilitate rapid comparison with a query.

FIG. 1

**Description**

**Field of the Invention**

This invention relates to computer systems and data processing. In particular, methods and apparatus are provided for efficiently indexing large quantities of data.

**Background of the Invention**

Computer systems and services that serve electronic content usually index the content using indices that are specific to the type of content being served. Therefore, an index for a web server will be designed and optimized to locate and serve web pages (e.g., .html files), an index for an ad server will be optimized to select and serve advertisements (e.g., images), a file server may be optimized to locate and serve documents, and so on. An index designed for one type of content cannot be used with other types of content.

Specialized indices generally do not permit simultaneous reading and writing. Therefore, whenever the index must be maintained (e.g., to add or remove an entry), the entire index may be temporarily locked or taken offline, and can't be used to locate and serve content during the maintenance. Depending on how long it is locked for writing, searches may be delayed for unacceptable periods of time.

Yet further, scanning or searching a specialized index can be relatively slow when entries in the index contain some or all the semantic content (e.g., in textual format) that must be read, parsed and compared with some target parameters in order to determine which index entries are relevant. In particular, an index entry representing a web page, an advertisement, a news story or other type of item may contain textual content of, or metadata regarding, the item. When a query is executed against the index, the textual content or metadata must be compared with the query, which can involve execution of a relatively slow pattern-matching algorithm for comparing text.

Even further, a specialized index for serving just one type of content may not be optimized to find the best or most valuable content first. Instead, such indices may be organized such that the entire index may need to be searched in order to ensure that the most valuable content is located.

**Summary**

Aspects of the present invention are set out in the claims.

In some embodiments, methods and apparatus are provided for efficiently indexing content to be served to users via an electronic system (e.g., an online service). The service may comprise a social networking service, a web server, a portal and/or some other type of service, and the content may be of multiple types (e.g., advertisements, résumés, status updates, job listings).

In these embodiments, the index maybe composed of multiple "slices," each of which is formatted to contain multiple index entries, with each entry corresponding to an item of content. One slice may undergo maintenance (e.g., to add a new entry, to change or remove an entry) at the same time other slices continue being read and used to identify or select content to be served.

An entry for a particular content item contains a list, array or other collection of integer values representing attributes or characteristics of the content item. Each unique integer maps to a unique name/value pair for an attribute (e.g., age, gender, location) and a corresponding value (e.g., 21-25, female, Southern California).

Similarly, the target attributes or characteristics of a query or request for content are formatted as integers. Thus, when a query is to be applied to the index, its integer values can be quickly compared with integer values of index entries. Content items corresponding to matching index entries can then be ranked to reduce the number of results, if necessary, and the winning content items served.

In some embodiments, within each entry, the integers representing the corresponding content item's attributes are ordered so that the integers representing the most distinguishing attributes (or the attributes least likely to match) are scanned first when a query is applied. Thus, if a given entry's content item does not match the terms of a query, the mismatch will be detected quickly and the query can jump to the next entry.

Further, within a slice, index entries may be ordered according to the values of their corresponding content items. In some implementations, the value of a content item reflects the revenue earned (or estimated to be earned) by the system when it serves the content item, the observed or estimated performance of the content item (e.g., how frequently users act upon the content item), and/or other measures of effectiveness.

**Brief Description of the Drawings**

The present invention will be described further, by way of example only, with reference to preferred embodiments thereof as illustrated in the accompanying drawings, in which:

>    FIG. 1 is a block diagram depicting an apparatus for indexing electronic content, in accordance with some embodiments of the invention.
>    FIG. 2 is a block diagram depicting an apparatus for indexing electronic content, in accordance with some embodiments of the invention.
>    FIG. 3 is a flow chart illustrating a method of maintaining an index of electronic content, in accordance with some embodiments of the invention.
>    FIG. 4 is a flow chart illustrating a method of using an index of electronic content, in accordance with some embodiments of the invention.
>    FIG. 5 is a system for indexing electronic content, according to some embodiments of the invention.

**Detailed Description**

The following description is presented to enable any person skilled in the art to make and use the invention. Various modifications to the disclosed embodiments will be readily apparent to those skilled in the art, and the general principles defined herein may be applied to other embodiments and applications without departing from the scope of the present invention. Thus, the present invention is not intended to be limited to the embodiments shown.

In some embodiments of the invention, methods and apparatus are provided for indexing electronic content. The content may be any type of electronic data formatted for presentation via a browser, application program or other user interface. The indexed content may include complete compositions presented individually, such as web pages, documents or videos, or may be components that can be presented as part of a web page or other composition, such as advertisements, job listings, notifications, status updates, news, documents, sports information, images, videos and so on. In short, electronic content items indexed in embodiments of the invention may include any type of content that can be presented to a user on a communications or computing device.

Because an index provided herein can accommodate multiple types of contents, separate indices are not necessary for each type. Embodiments may be implemented as part of virtually any online service that serves data, whether it is a social network service, a web server, a portal site, a search engine, etc. The content may be indexed on a set of one or more computer systems, and may be presented to users operating portable and/or stationary devices.

**Introduction**

In systems that serve electronic content for presentation to users, some information about a target user to whom a content item is to be presented is often provided as part of a query or content request. For example, when a user of a social network service connects to the service's site, and navigates to a page of the site, a web browser or other display engine may generate a query to a data server operated by the site, to identify and/or obtain content to present to the user. The content query may include or be accompanied by one or more attributes or characteristics of the user (e.g., sex, age, location, employment status).

Similarly, content items that have been stored and that are to be served to users of electronic services and applications may have associated attributes that identify target audiences of the content items. For example, an advertisement designed to promote sales of a particular product, or a job listing regarding a new job opening, may be received with information identifying types of users to whom the item should be presented (e.g., sex, age, location, employment status).

In response to a query or request for content to be served to a particular user, the data server searches for appropriate content, by comparing known attributes of the user to recorded attributes of the target audiences of the stored content items. Some number of appropriate content items are identified and delivered for presentation to the user.

**An Index for Facilitating Serving of Electronic Content**

In some embodiments of the invention, attributes used to characterize content items, and/or to characterize a target audience of the content items, are stored in an index as integers (or integer tokens) instead of as text. For example, one attribute that may be used to select content items for serving to a target user is age, and a provider of a content item may specify the age (or a range of ages) of people to whom the content item is targeted. When the content item is indexed, within the content's entry in the index a particular integer is stored to indicate that age (or age range).

Thus, if the content item is an advertisement targeted at people between the ages of 21 and 25, the age attribute may be stored as a first integer, such as "2045". For another content item targeted at people between the ages of 46 and 50, the age attribute may be stored as a second integer, such as "8749." Another integer, such as "8" may represent an "intent" attribute having the value "job seeker" and may be stored within entries corresponding to content items that the providers want to have presented to people looking for a job.

In these embodiments, a content item's entry in an index contains any number of integers representing name/value pairs of specific attributes and values for those attributes. In some implementations, each unique attribute/value pair maps to a unique integer, and vice versa, meaning that a given integer within an index entry corresponds only to one specific attribute having one specific value.

In other embodiments of the invention, however, a given integer may be unique to a particular type of content (e.g., advertisement, subscription plan, status update, news feed). In these embodiments, the meaning of a particular integer stored within a content item's entry will depend upon the type of content item, and the same integer found within index entries for two content items of different types may or may not map to the same attribute/value pair.

In some embodiments of the invention, an integer may represent multiple attributes and their associated values. For example, an integer such as "24" may represent an age in the range of 26 to 30, combined with a geographic location attribute having the value "Northern California." Also, an integer may represent a negative or "not" value. For example, the integer "19452" may correspond to an industry of targeted users, with the value "not farming," in which case an entry with this integer would match a query for content items that target industries other than farming.

By using an integer-based scheme for coding attributes provided in an embodiment of the invention described herein, index entries can be searched very rapidly to find content items appropriate for a target user having particular values for those attributes. When the user's characteristics are received (e.g., his age, his geographic region, his status within an online service), they are converted into corresponding integers (if not received as such), and some or all index entries can be rapidly scanned for matching integers.

Because the search mainly or only involves comparing integers - a set of integers representing attribute/value pairs of a target user, against collections of integers found within entries of the index and representing attribute/value pairs of the corresponding content items - it may be done without the overhead associated with a semantic-laden textual search. In other words, comparing integer values against each other is inherently simpler and faster than parsing and searching text for a particular pattern of text characters.

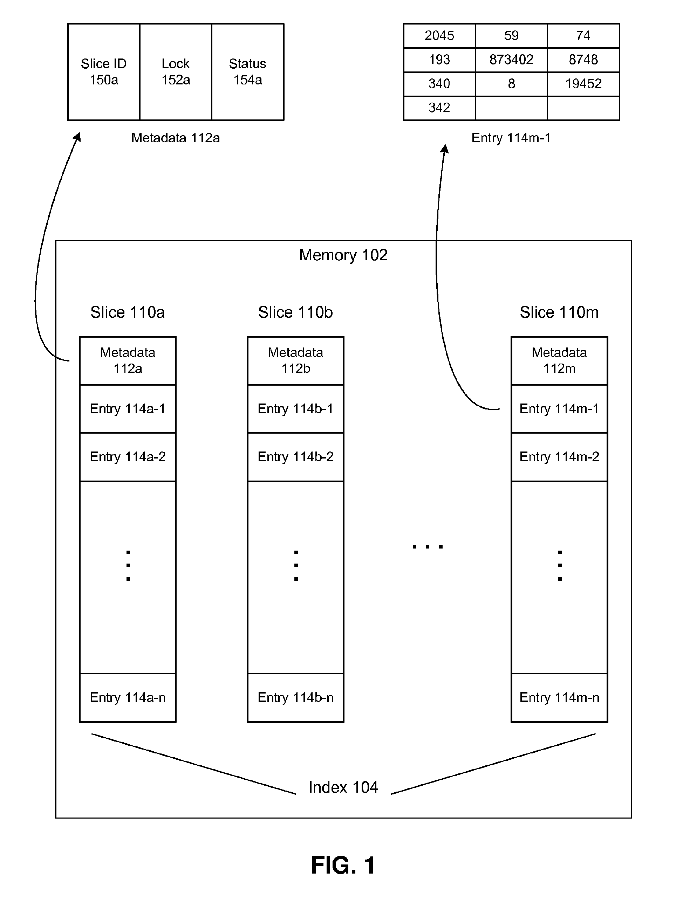

FIG. 1 is a diagram of an apparatus for indexing electronic content items according to some embodiments of the invention. In these embodiments, memory 102 is solid-state memory (e.g., random-access memory or RAM) of a single computing device (e.g., a computer server), although some or all of its contents may be replicated across multiple devices.

Within memory 102, index 104 comprises multiple slices 110 (i.e., slices 110a - 110m) each storing a subset of all index entries of index 104. Each entry 114 within a slice (e.g., entries 114b-1 to 114b-n of slice 110b), when populated, corresponds to one content item. The content items may be stored on the same device that memory 102 is part of, or on one or more different devices.

Although each slice 110 is portrayed as having the same number of entries 114 in FIG. 1, this is not required in all embodiments. Different slices may be able to store different numbers of entries.

In some implementations, a new content item (or some portion of the content item) is hashed in some manner to identify which slice the item will be stored in. Content items of the same type (e.g., advertisements, job listings) may map to the same slice or different slices, and similarly, content items relating to the same thing (e.g., a product, a service, a person, a company) may map to the same slice or different slices.

Each slice includes metadata 112 (e.g., metadata 112b for slice 110b). As shown in the expanded view, metadata 112a of slice 110a comprises slice identifier 150a, lock 152a and status 154a. Identifier 150a uniquely identifies slice 110a, while lock 152a is used by reader and writer entities to lock the slice as needed.

Status 154a of metadata 112a of slice 110a provides status information, which may include an indication as to whether the slice is online (can be searched) or offline (not available for new searches), may indicate or identify entries that are free (or not free), may identify a number of entries in the slice, etc. Illustratively, a slice may be taken offline while it is being maintained (as described below). In implementations in which populated entries are packed toward the front of a slice, status 154a may identify the first free entry in slide 110a, and this pointer or reference would be updated as new entries are stored and old ones emptied.

As shown in illustrative entry 114m-1 of slice 110m, and described above, an entry may comprise a collection of integers representing attributes of the target audience of the content item corresponding to the entry. Therefore, each integer listed in the array of integers of entry 114m-1 may map to a unique attribute/value pair.

In an illustrative embodiment of the invention, index 104 may have approximately 10 slices, and each slice may store approximately 100,000 integers, the length of each of which may be 16 bits, 32 bits, 64 bits or some other length. For purposes of maintaining the index (described below), index 104 and memory 102 may include an extra or spare slice, or one of the illustrated slices may be used as a spare.

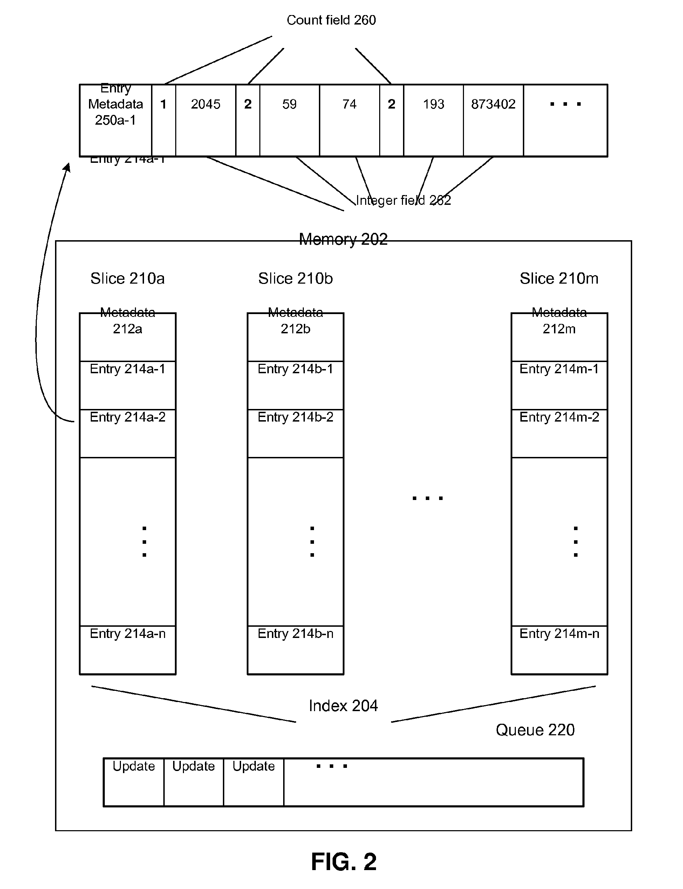

FIG. 2 is a diagram of an apparatus for indexing electronic content, according to some embodiments of the invention. In these embodiments, the index can grow to accommodate hundreds of thousands of entries while still providing satisfactory performance (e.g., minimal latency) for virtually every content request or query.

In these embodiments, similar to the embodiments reflected in FIG. 1, memory 202 stores index 204, which comprises multiple slices 210, and each slice contains metadata 212 and multiple entries 214. In the embodiments of FIG. 2, however, an entry may be structured differently, as exemplified by the expanded view of entry 214a-1.

Entry 214a-1 includes entry metadata 250a-1, which stores information about the content item corresponding to entry 214a-1 and which is described further below. Metadata 250a-1 need not be stored at the front of the entry.

In embodiments of the invention reflected in FIG. 2, attributes of content items corresponding to entries 214 are stored as conjunctions of disjunctions. A conjunction of disjunctions may be represented logically as:

$$(X_0 \vee X_1) \wedge (X_2 \vee X_3) \wedge \ldots \wedge (X_y \vee X_z)$$

Each disjunction is composed of one or more terms ($X_n$) connected by the OR operator ($\vee$), all the disjunctions are coupled by AND operators ($\wedge$), and there may be one or more disjunctions in the conjunction. Each disjunction is represented as a count field 260 and one or more integer fields 262. Count field 260 identifies the number of terms in a disjunction (i.e., the number of integers), and the corresponding integer fields store the integer terms of the disjunction.

The conjunction of the three disjunctions shown in entry 214a-1 may be represented textually as:

$$(2045) \text{ AND } (59 \text{ OR } 74) \text{ AND } (873402 \text{ OR } 193)$$

Replacing the integers with illustrative attribute/value pairs they may represent, this conjunction of disjunctions could correspond to a content item whose target audience includes people who:

are between 21 and 25 years old [2045]; AND
work in the communications industry [59] OR work in the information technology industry [74]; AND
reside in Northern California [193] OR reside in Boston, Massachusetts [873402].

Terms within a single disjunction need not correspond to the same attribute. For example, the disjunction (59 OR 74) may instead map to attributes/values such as marital status=married [59] OR education=bachelor's degree [74].

Any attribute or characteristic that can be known about a person or that can be used to describe a target of an item of content, along with its corresponding value for a specific person (e.g., a user of an online service) or a specific content item (e.g., a job posting for a software engineer), can be represented and stored as an integer. A database, table or other data structure for mapping attribute/value pairs to integers, and vice versa, may be maintained in the same memory as an index described herein, or may be stored elsewhere.

Together, populated count fields 260 and integer fields 262 of entry 214a-1 may be referred to as the targeting data or targeting section of the entry or of the corresponding content item, because they identify targets of the content item.

The metadata section of an entry (e.g., entry metadata 250a-1 of entry 214a-1) may store information such as, but not limited to: an identifier of the content item corresponding to entry 214a-1, a storage location of the content item, a type of the content item (e.g., advertisement, job posting, video, status notification), a score (or rating, value or other measure of effectiveness) of the content item, the number of disjunctions in the entry, a budget for serving the content item (e.g., a budget for a period of time, remaining unused budget for a period of time), etc.

The score, rating or other measure of performance or effectiveness of a content item may indicate how often the item has been served, how successful it has been (e.g., how frequently users who receive the content item act upon it), its value to the system or service that serves the content items, etc. The score may encompass all servings of the item, meaning that it may indicate how many times users have acted on the item, over all those servings, without regard for different types of users (e.g., users having different attribute values).

Also, or alternatively, a score or rating corresponding to one or more types of user may be stored in metadata 250a-1 or elsewhere. For example, ratings of content items regarding individual users and/or groups of users sharing a common attribute may be stored in the same computer system or a different one.

Therefore the effectiveness of a given content item may be quickly determined, over all types of users to whom it has been served, and/or for users having specific attributes. Illustratively, measures of effectiveness may be maintained for all relevant integers - that is, for each integer (i.e., each attribute/value pair) that matches at least one user to whom the content item has been served, the performance of the content item may be tracked.

In some embodiments of the invention, content items' scores or measures of effectiveness may be used to rank or filter content items identified when a query is executed against index 204. Execution of a query may result in many (e.g., hundreds, thousands) of matching content items, but by considering the scores of those items (and/or other information), the top X (e.g., one, three) content items can be identified, which may be those that are most likely to elicit action on the part of the target user, based on historical performance of the items.

Some or all of metadata in entry metadata 250a-1 may be represented as integers, as done with the targeting information of the rest of the entry. In particular, metadata that may need to be searched as part of a query execution (e.g., content item identifier, content item type, remaining budget for the content item, score) may be stored as integers. A particular integer may be unique across an entry's entry metadata field and integer fields, or integers used in entry metadata fields may be mapped to a different set of name/value pairs than integers within the entry's targeting section.

Also shown in FIG. 2 is queue 220. Queue 220 receives and stores updates to index 204, which may include new entries (or new content items for which new entries must be generated), updates to existing entries (e.g., modified targeting data, updated budget information), indications to delete or suppress an entry (e.g., because its content item has expired, because its content item should temporarily not be served), and/or other changes to the index. As described below, the updates may be applied during maintenance of the individual slices.

Index 204 and queue(s) 220, and possibly other data structures (e.g., one or more tables mapping integers to attribute/value pairs) may reside within one computer system's memory, thereby promoting rapid operation of the index. These structures may be replicated across multiple different computer systems, however, to provide distributed processing, load-balancing, redundancy and/or other benefits.

In some embodiments of the invention, additional optimizations may be employed for an index, beyond the use of integers to represent attribute/value pairs. One such optimization involves sorting the integer tokens of an entry so that those representing the most distinguishing or narrowest attributes, or those representing the attributes least likely to match a query, are listed (and scanned) first.

With this optimization, when a content query or request for content is received, and integers representing a target audience are used to search the index for matching entries, the scan of each entry will begin with integers that are least likely to match the query. Therefore, as soon as a comparison fails, because the index entry contains an integer (attribute/value pair) that conflicts with those of the query, the scan of that entry can be aborted and the search can move to the next entry.

In other words, if it is determined that a particular set of attributes provide the most effective or fastest targeting, integers representing those attributes may be positioned within index entries such that they are the first ones scanned when searching for content items to serve to users. Integers representing attributes that are likely to match many queries (e.g., language=English) may be positioned toward the end of index entries, because they are least likely to provide a meaningful differentiation between different content items and are more likely to match many queries.

In some embodiments of the invention in which a content item's attributes are stored as a conjunction of disjunctions (e.g., as shown in FIG. 2), a disjunction is represented by one count field and one or more integer fields. In applying this optimization regarding sorting of an entry's integer tokens, the entry's disjunctions are sorted according to the specificity, breadth or likelihood that their terms will match those of a request for content. The disjunctions may be placed in inverse order of the probability that they will match a future query. When executing a query against an entry comprising a conjunction of disjunctions, and especially if the query's attributes are expressed as a conjunction of disjunctions, as soon as a disjunction is found that conflicts with the query, that rest of that entry can be skipped.

The manner in which entries' targeting data (i.e., integer tokens) are sorted may depend on the type of content item represented by the entries. In particular, for one type of content (e.g., advertisements), one collection of attributes may be particularly distinguishing and less likely to match a future query, and therefore may be placed at the front of the targeting section. For another type of content (e.g., job announcements), a different collection of attributes may be more distinguishing, and so on. The type of content represented by an entry may be identified in the entry's metadata field and/or elsewhere.

Another optimization that may be applied in some embodiments of the invention involves sorting index entries within a slice. In particular, entries may be sorted according to the values of their corresponding content items to the system or service that serves the content items. For example, for content items that consist of advertisements or other sponsored content that the system is paid to serve (e.g., job listings, company announcements, status updates), index entries for those items that yield the most revenue (or that are estimated will yield the most revenue) may be positioned earlier in the index than other entries.

In some embodiments of the invention, a search of an index slice may by default terminate after a predetermined period of time (e.g., 25 milliseconds), even if not all entries in the slice have been searched. Only content items corresponding to matching entries found during that time will be considered for serving. This allows the system to identify and serve content items quickly, with less latency from the time the requests for content items are received. By organizing the index entries within a slice according to the value of the content items, the system can also promote high revenue.

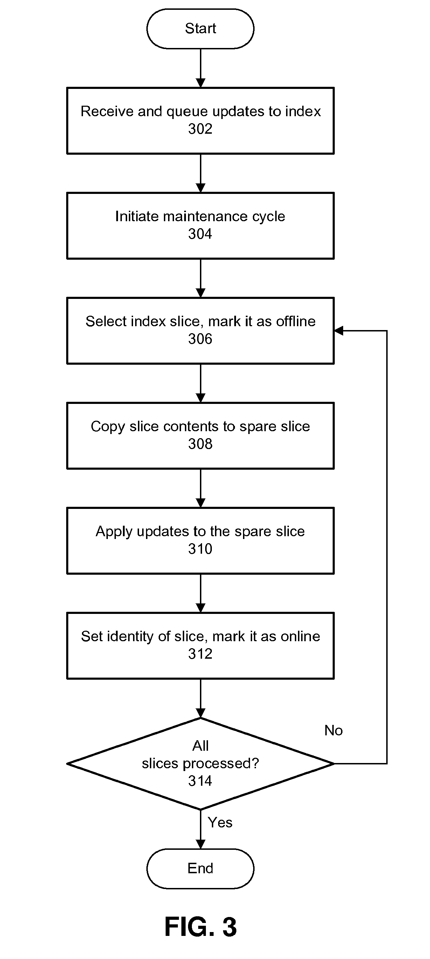

FIG. 3 is a flow chart demonstrating a method of maintaining an index for serving content items, according to some embodiments of the invention. The illustrated method may apply to an index such as index 204 of FIG. 2 and/or index 104 of FIG. 1.

In operation 302, updates to the index are received and queued. Illustratively, the computer system memory in which the index is implemented may host one or more queues for storing the updates. An update to the index may be a new index entry to be stored for a newly received content item, a modification to the target attributes of an existing index entry (e.g., because the provider of the corresponding content item redefined the target audience), a directive or criteria for sorting the index entries within a slice, and/or other changes to the index.

In operation 304, a maintenance cycle commences. In some implementations, a new cycle may commence on a regular basis (e.g., every several seconds, every couple of minutes). The more frequently the maintenance cycles commence, the less time each cycle takes to execute and the shorter disruption there is to the content serving process, if any. For example, if a new cycle is initiated every seven seconds, an entire cycle may last on the order of one second (or less).

In operation 306, one slice of the index is marked or tagged as being offline. Illustratively, a flag in a metadata portion of the slice (e.g., in status field 154a of metadata 112a of slice 110a of index 104 of FIG. 1) may be set. When this flag is set, no more reader entity will be able to commence reading the slice. A reader entity is a process (or other code block) that reads the slice in response to a query or request for content, in order to find index entries whose corresponding content items are relevant or responsive to the query. Read operations that are already in progress need not be aborted, but no new ones will commence.

In operation 308, the contents of the slice are copied to a spare slice (e.g., with a point-in-time copy operation). In some implementations, an index comprises some number of active slices (e.g., ten) and one or more spare slices for assisting with maintenance of the index.

In operation 310, updates that affect the current slice are retrieved from the queue of updates and applied to the copy. For updates that modify existing entries (e.g., to change targeting, to update a content item's score or measure of effectiveness, to adjust an item's budget), the affected entries are located and changed accordingly. Entries that are to be removed (e.g., because the corresponding content items have been purged) are cleared.

Some updates may comprise new entries to be stored in the slice. In some implementations, new entries may be received in the queue fully formed, that is, ready to be written to the slice. In other implementations, some processing may be required to generate an entry from the update that requires creation of a new entry.

For example, a new content item or information regarding a new content item may be received, including a definition of its target audience. The targeting data may be expressed textually and need to be converted into corresponding integers for storage in the entry's targeting section, and pieces of metadata (e.g., daily budget, score, content item identifier) may need to be converted into integers, if appropriate, for storage in the entry's metadata field.

Other types of updates may involve sorting or ordering the entries of the slice, and/or ordering or re-ordering the contents of one or more entries' targeting sections. In some implementations, the slice's entries may be automatically sorted (according to default or specified criteria) at the end of operation 310, to pack them, place the most valuable at the head of the slice, etc.

In operation 312, the slice copy is brought online, with its identity set to match that of the slice taken offline in operation 306. The slice that was formerly a spare, and that received the copied contents of the slice being maintained, thus takes the place of the offline slice.

After the slice is brought online, the maintenance cycle may pause (e.g., for one or two times the average length of time needed to read the slice), so that any reader entities that were reading the slice that was taken offline have time to complete their operations. The slice that was taken offline in operation 306 may be used as the spare slice for the maintenance of the next slice of the index, and so it is beneficial to ensure that the readers have completed their searches before the offline slice is used to maintain another slice.

In operation 314, it is determined whether all slices have been maintained during the present maintenance cycle. If so, the illustrated method ends. Otherwise, the method returns to operation 306 to select the next slice to be maintained.

It may be noted that updates to the index may be continually received and queued, throughout its operation and maintenance. Operation 302 of FIG. 3 is not meant to indicate that updates are only accepted or received at certain times. In some embodiments of the invention, all updates to the index are stored in one queue to await application during index maintenance. In some other embodiments, multiple queues may be employed, such as one for each slice.

In some implementations, when an update is received at the content-serving system that employs the index, the content item associated with the update (or the content item being delivered with the update) is hashed to identify the slice in which it should be stored. When a content item is modified by an update, this may or may not cause it to be moved to a different slice (e.g., by placing an appropriate entry in the queue of updates). In other implementations, a content item's corresponding entry in the index persists in the same slice from the time it is first indexed until it is removed.

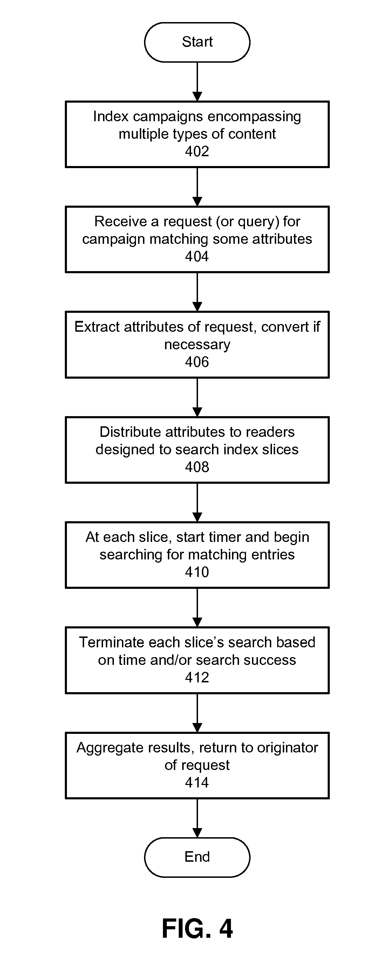

FIG. 4 is a flow chart demonstrating a method of serving content using an index provided herein, according to some embodiments of the invention.

Content items that may be served in the illustrated embodiments of the invention include content that can be presented to a user electronically, via a portable or stationary communication or computing device (e.g., smart phone, tablet computer, laptop, desktop computer), within a browser or other program. Illustrative types of content items that may be indexed for serving include, but are not limited to: advertisements, subscription offers (e.g., subscriptions to enhanced access to a system or service), status updates (e.g., regarding individuals, products, companies, other organizations), job postings or listings, résumés, user profiles or components of user profiles, etc.

In some embodiments of the invention reflected in FIG. 4, campaigns of content items are indexed rather than individual content items. Each campaign relates to a product, service or other thing, and may encompass any number of associated content items (i.e., one or more). For example, a campaign regarding a new laptop computer may involve any number of advertisements of the product, with each content item featuring a different graphic or creative; a campaign regarding a job opening may involve multiple announcements for the position, with each content item announcing the job in a different form. A given sponsor may submit any number of campaigns, having the same or different subjects or focuses. Campaigns that encompass different types of content items are indexed using a single index.

Each campaign has a target audience, which may be identified using attributes and corresponding values. Illustrative attributes that a source of a campaign or content item may use to define its target(s) may include, but are not limited to: age, gender, industry in which a person works, employer, education level, education institution(s), geographic area of residence, geographic area of work, job title, job description, rank, seniority, years of employment, income, marital status, job status (e.g., unemployed, searching), skills, achievements, qualifications, licenses, membership in organizations, religion, political affiliation, and many more.

As described above, these attribute/value pairs are converted into unique integers that are used within campaign queries (or requests for campaigns) to identify a target user to whom a content item of the requested campaign will be presented. The integers are also used in index entries representing individual campaigns to represent the target audiences of those campaigns.

In operation 402, campaigns are received and indexed. An index described above, or a similar structure, may be used. The content items corresponding to the indexed campaigns may be stored on the same system or machine as the index, or on another system or machine.

The system or service executing the illustrated method may encompass or operate all computing devices associated with indexing the campaigns and serving content items in response to requests or, alternatively, just the devices involved in indexing the campaigns.

In operation 404, a request or query for one or more campaigns is received at the index system. For the purpose of describing the illustrated method of the invention, the terms "request" and "query" may be used interchangeably.

In some implementations, the system or service operating the index executes the illustrated method but does not maintain or serve the associated content items (i.e., content items associated with campaigns identified by the index system in response to queries). In these implementations, the index system simply receives a request for campaigns matching a specified set of attribute/value pairs, which may be expressed as integers or converted into integers, as described above, and returns zero or more campaigns (or identifiers of zero or more campaigns).

A request to the index system in these implementations may come from an aggregator, content server, web server or other entity that receives requests for content items to serve to users (e.g., from web browsers and application programs executing on user-operated devices). Although the index system operates separately from the content serving system, they may be managed or operated by a common entity. Hardware entities (e.g., computer systems) and/or software entities (e.g., computer program modules) of the index system and the content serving system may be completely separate or may overlap to some degree.

In some other implementations, the index system and the content serving system are co-located or one is part of the other. In these implementations, the combined system receives a request for some number of content items, from a website, portal, application, web browser, communication service provider or other entity that will receive responsive content items from the system and present them to a user.

For example, when a user connects to a social network website, a page of the website will begin loading on the user's device. As part of composing the page, some number (e.g., three) of content items is needed for presentation within the page, and so a request for three content items is issued to the combined system, and the combined system queries the index system to identify suitable campaigns. From the identified campaigns, three content items will be served by the combined system, for presentation to the target user

In operation 406, attributes of a target user to whom the results of the request will be served are extracted from the query. If not already in integer form, the attributes are converted into their integer equivalents, using a mapping table or other data structure maintained by the index system or the entity that issues the request to the index system (e.g., a content serving system).

When a content request is received at a content serving system, or a combined content serving and index system, it may include one or more attributes of the target user to whom the served content items will be presented. The content request may also include information about the page, frame or other construct in which the content items will be presented. Such information may indicate a nature of the page or the website, (e.g., social network service, search engine, a professional sports team's site, employment recruiter), characterizations of other content that will be presented in the page (e.g., job listings, news articles), and/or other attributes of the page or website in which the content items will be presented.

Some or all of the attributes of the target user and/or the environment in which the content items will be presented may be received in integer form or may be converted into integer form upon receipt of the request. Any or all of these integer representations of attribute/value pairs may be used to search the index.

In operation 408, attributes of the query are supplied, preferably in integer form, to reader entities configured to read the index's slices. A reader entity may be a hardware or software module configured to search a slice's entries to find matches for queries. A reader may be tied to a specific slice, or a pool of readers may be maintained for use in reading any slice.

In operation 410, at each slice that is online, a timer is started and at least one reader begins scanning the slice to find entries having attributes that match those of the query. As each entry is searched for the query's attributes, as soon as an integer token is encountered that conflicts with the query's attributes, the search advances to the next entry.

In operation 412, the search of each slice terminates when it reaches a threshold duration of time (e.g., 25 milliseconds), as long as it has identified a threshold number of entries (e.g., 10). If the threshold number of entries has not been identified by that time threshold, the search may continue until (a) all entries have been search, (b) the threshold number of entries has been identified or (c) a second time threshold is reached. For each identified entry, the corresponding campaign and/or its storage location is identified (e.g., from the entry's metadata field).

It may be noted that any slice that is offline at the time execution of the query against the index begins may be omitted from the search. Because only one slice will be offline at a time during a maintenance cycle, the number of campaigns not searched because of their slice being offline is kept to a minimum. Also, as described above, maintenance of individual slices is performed expeditiously, and any search that was initiated before the slice was marked offline will be able to complete normally.

In operation 414, the results of the searches of the slices are returned. The results may comprise a collection of campaigns (or identifiers of campaigns), and may be aggregated by the index system or by the entity that submitted the request to the index system.

In some embodiments of the invention, results of a search are ranked or filtered to reduce the number of matches. For example, the results may be ranked based on scores of the campaigns (e.g., as noted in the corresponding entries' metadata), measures of effectiveness (e.g., over all users or over all users that match the target user's attributes, etc.

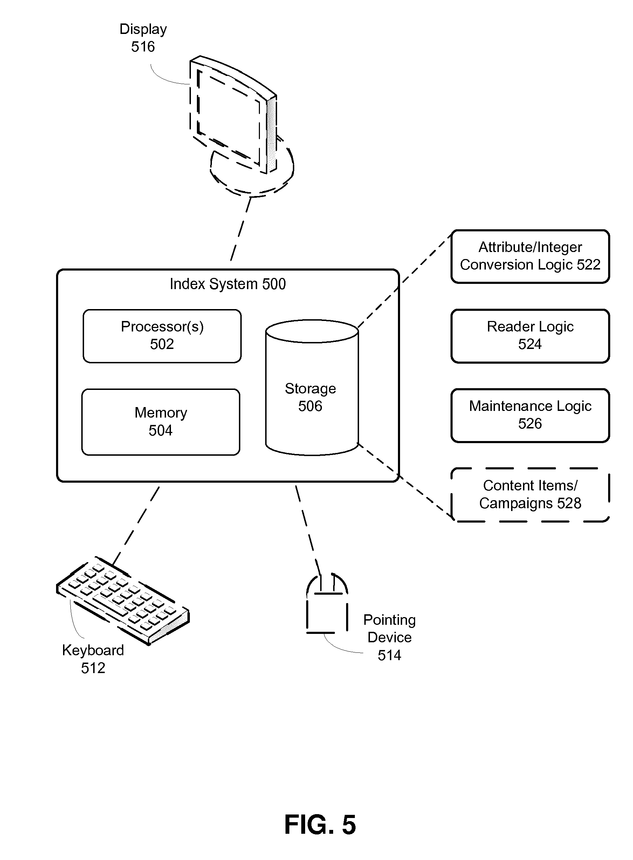

FIG. 5 is a block diagram of a system for indexing electronic content, according to some embodiments of the invention.

Index system 500 of FIG. 5 comprises processor(s) 502, memory 504 and storage 506, which may comprise one or more optical and/or magnetic storage components. Index system 500 may be coupled (permanently or transiently) to keyboard 512, pointing device 514 and display 516.

Memory 504 stores one or more indices of electronic content; the content may be stored on and served from index system 500, or may be stored on and served from one or more other systems coupled to index system 500.

Storage 506 of the index system stores logic that may be loaded into memory 504 for execution by processor 502. Such logic includes attribute/integer conversion logic 522, reader logic 524, maintenance logic 526 and optional content items/campaigns 528. In other embodiments of the invention, any or all of these logic modules or other content may be combined or divided to aggregate or separate their functionality as desired.

Attribute/Integer conversion logic 522 comprises processor-executable instructions for mapping between attribute/value pairs (e.g., of a target audience, of a target user) and corresponding integer tokens. Logic 522 may include or be accompanied by one or more tables or indices for mapping between a given integer and its corresponding attribute/value pair.

Reader logic 524 comprises processor-executable instructions for searching index entries to find matches with a query. Logic 524 may therefore be designed to perform comparisons between integer tokens of a query and integer tokens stored in index entries.

Maintenance logic 526 comprises processor-executable instructions for updating and maintaining an index stored in memory 504. In particular logic 526 will apply updates queued for the index, and maintain each of multiple slices in turn. As described previously, updating the index may involve removing an entry, updating the metadata and/or targeting data of an entry, and writing new entries into the index.

Content items and campaigns 528 include content items and/or campaign descriptions. This may be stored on a system coupled to index system 500 if they are not stored on system 500.

The environment for the approach described herein may incorporate a general-purpose computer or a special-purpose device such as a hand-held computer or communication device. Details of such devices (e.g., processor, memory, data storage, display) have been omitted for the sake of clarity.

Data structures and program code described in this detailed description are typically stored on a non-transitory computer-readable storage medium, which may be any device or medium that can store code and/or data for use by a computer system. Non-transitory computer-readable storage media includes, but is not limited to, volatile memory, non-volatile memory, magnetic and optical storage devices such as disk drives, magnetic tape, CDs (compact discs), DVDs (digital versatile discs or digital video discs), or other non-transitory computer-readable media now known or later developed.

The methods and processes described in the detailed description can be embodied as code and/or data, which can be stored in a non-transitory computer-readable storage medium as described above. When a processor or computer system reads and executes the code and/or data stored on the medium, the processor or computer system performs the methods and processes embodied as data structures and code and stored within the medium.

Furthermore, the methods and processes described below can be included in hardware modules. For example, the hardware modules may include, but are not limited to, application-specific integrated circuit (ASIC) chips, field-programmable gate arrays (FPGAs) and other programmable-logic devices now known or later developed. When the hardware modules are activated, the hardware modules perform the methods and processes included within the hardware modules.

The foregoing descriptions of embodiments of the invention have been presented for purposes of illustration and description only. They are not intended to be exhaustive or to limit the invention to the forms disclosed. Accordingly, many modifications and variations will be apparent to practitioners skilled in the art. The scope of the invention is defined by the appended claims and their equivalents.

**Clauses**

1. A non-transitory computer-readable medium containing a data structure for indexing electronic content items for serving in response to content requests items, the data structure comprising:
multiple independent slices, each slice comprising: metadata for:

identifying the slice; and
controlling access to the slice; and

multiple entries, each entry corresponding to an item of electronic content and comprising:

metadata relating to the corresponding item; and
multiple integer tokens, each integer token representing an attribute of a target audience of the item of electronic content and a value of that attribute.

2. The computer-readable medium of clause 1, wherein:
the multiple entries of a given slice are ordered according to values of their corresponding items of electronic content, from high-value to low-value; and
a high-value entry corresponds to an item of electronic content that produces more revenue when served than an item of electronic content corresponding to a low-value entry.

3. The computer-readable medium of clause 11 or 2, wherein:

the multiple integer tokens of a given entry are ordered according to the inverse probability that the attributes and attribute values represented by the multiple integer tokens will match attributes and attribute values of an unknown future query executed against the data structure.

4. The computer-readable medium of any preceding clause, wherein the data structure further comprises:

a mapping of the multiple integer tokens to the attributes and attribute values represented by the integer tokens.

5. The computer-readable medium of any preceding clause, wherein the data structure further comprises:

a queue for storing updates to the data structure.

6. The computer-readable medium of any preceding clause, wherein a given slice may be placed offline while other slices remain online.

7. A system for operating a content index, the system comprising:

a memory comprising:

an index of electronic content, wherein each entry in the index:

corresponds to a set of electronic content; and
comprises a set of integer tokens representing attributes of a target audience of the set of electronic content and corresponding values of the attributes; and

a queue for storing updates to the index;
wherein the index comprises multiple independent slices, each slice comprising multiple index entries; and
reader logic for searching the index, in response to a request for content,
for entries having target audiences matching a target user to whom the requested content is to be presented.

8. The system of clause 7, further comprising:

a mapping of integer tokens to the attributes and values represented by the integer tokens; and
maintenance logic for periodically updating the index, wherein each periodic update of the index includes taking one slice of the multiple slices offline at a time.

9. The system of clause 7 or 8, further comprising:

a storage device storing the indexed electronic content; and
serving software configured to serve the electronic content to target users.

**Claims**

1. A method of operating a content index, the method comprising:

indexing multiple sets of electronic content in a computer system memory, wherein each set of electronic content is indexed by storing in the index a corresponding entry comprising:

metadata relating to the set of electronic content; and
one or more integer tokens, each integer token representing an attribute of a target audience of the set of electronic content and a corresponding value of the attribute;

receiving a request for content to be served to a target user, the target user having a set of attributes and corresponding values;
searching the index for entries comprising integer tokens representing a subset of the set of attributes and corresponding values of the target user; and
in response to the request for content, communicating identities of one or more sets of electronic content having attributes and corresponding values matching a subset of the set of attributes and corresponding values of the target user.

2. The method of claim 1, wherein said indexing comprises:

receiving a first set of electronic content to be selectively served to target users;
receiving a first set of attributes of a target audience of the first set of electronic content, and corresponding values of the attributes;
mapping each attribute in the first set of attributes, and the corresponding value, into an integer token, to produce a set of integer tokens representing a target audience of the first set of electronic content;
hashing the first set of electronic content to generate an identifier of a first slice of the index, wherein the index comprises multiple slices;
writing a first entry to the first slice to represent the first set of electronic content, wherein the new entry comprises the set of integer tokens.

3. The method of claim 2, further comprising, after writing the first entry:

analyzing feedback from multiple servings of the first set of electronic content to calculate a score of the first set of electronic content; and

sorting entries of the first index slice, including the first entry, according to their scores.

4. The method of claim 3, wherein the score represents a monetary value of the first set of electronic content.

5. The method of claim 3, wherein the score represents a performance of the first set of electronic content.

6. The method of any of claims 2 to 5, further comprising, after writing the first entry:

taking the first index slice offline, wherein no new reads may be initiated on the first index slice after it is taken offline;
initiating new reads on other index slices in the multiple index slices while the first index slice is offline;
maintaining the first index slice while it is offline; and
bringing the first index slice online after said maintaining.

7. The method of any preceding claim, further comprising, for one or more entries in the index:

sorting the integer tokens of the entry such that the integer tokens are stored in inverse order of a probability with which the attributes and corresponding values represented by the integer tokens will match a set of attributes and corresponding values of a target user of an unknown future request for content.

8. The method of any preceding claim, wherein:

each of the multiple sets of electronic content is a campaign; and
each campaign includes one or more servable content items.

9. The method of any preceding claim, wherein each of the multiple sets of electronic content comprises one servable content item.

10. A non-transitory computer-readable medium storing instructions that, when executed by a processor, cause the processor to perform a method of any preceding claim.

11. A non-transitory computer-readable medium containing a data structure for indexing electronic content items for serving in response to content requests items, the data structure comprising:

multiple independent slices, each slice comprising:
metadata for:

identifying the slice; and
controlling access to the slice; and

multiple entries, each entry corresponding to an item of electronic content and comprising:

metadata relating to the corresponding item; and
multiple integer tokens, each integer token representing an attribute of a target audience of the item of electronic content and a value of that attribute.

12. The computer-readable medium of claim 11, wherein the data structure further comprises:

a mapping of the multiple integer tokens to the attributes and attribute values represented by integer tokens.

13. The computer-readable medium of claim 11 or 12, wherein the data structure further comprises:

a queue for storing updates to the data structure.

14. The computer-readable medium of any of claims 11 to 13, wherein a given slice may be placed offline while other slices remain online.

15. A system for operating a content index, the system comprising:

a memory comprising:

an index of electronic content, wherein each entry in the index:

corresponds to a set of electronic content; and
comprises a set of integer tokens representing attributes of a target audience of the set of electronic content and corresponding values of the attributes; and

a queue for storing updates to the index;
wherein the index comprises multiple independent slices, each slice comprising multiple index entries; and

reader logic for searching the index, in response to a request for content, for entries having target audiences matching a target user to whom the requested content is to be presented.

| Slice ID 150a | Lock 152a | Status 154a |
|---|---|---|

Metadata 112a

| 2045 | 59 | 74 |
|---|---|---|
| 193 | 873402 | 8748 |
| 340 | 8 | 19452 |
| 342 | | |

Entry 114m-1

**Memory 102**

**Slice 110a**

| Metadata 112a |
|---|
| Entry 114a-1 |
| Entry 114a-2 |
| ⋮ |
| Entry 114a-n |

**Slice 110b**

| Metadata 112b |
|---|
| Entry 114b-1 |
| Entry 114b-2 |
| ⋮ |
| Entry 114b-n |

. . .

**Slice 110m**

| Metadata 112m |
|---|
| Entry 114m-1 |
| Entry 114m-2 |
| ⋮ |
| Entry 114m-n |

Index 104

**FIG. 1**

Count field 260

| Entry Metadata 250a-1 | 1 | 2045 | 2 | 59 | 74 | 2 | 193 | 873402 | · · · |
|---|---|---|---|---|---|---|---|---|---|

Entry 214a-1

Integer field 262

Memory 202

Slice 210a

Metadata 212a

Entry 214a-1

Entry 214a-2

⋮

Entry 214a-n

Slice 210b

Metadata 212b

Entry 214b-1

Entry 214b-2

⋮

Entry 214b-n

· · ·

Slice 210m

Metadata 212m

Entry 214m-1

Entry 214m-2

⋮

Entry 214m-n

Index 204

Queue 220

| Update | Update | Update | · · · |
|---|---|---|---|

**FIG. 2**

Start

Receive and queue updates to index
302

Initiate maintenance cycle
304

Select index slice, mark it as offline
306

Copy slice contents to spare slice
308

Apply updates to the spare slice
310

Set identity of slice, mark it as online
312

All
slices processed?
314

No

Yes

End

**FIG. 3**

Start

Index campaigns encompassing
multiple types of content
402

Receive a request (or query) for
campaign matching some attributes
404

Extract attributes of request, convert if
necessary
406

Distribute attributes to readers
designed to search index slices
408

At each slice, start timer and begin
searching for matching entries
410

Terminate each slice's search based
on time and/or search success
412

Aggregate results, return to originator
of request
414

End

# FIG. 4

Display
516

Attribute/Integer
Conversion Logic 522

Index System 500

Reader Logic
524

Processor(s)
502

Storage
506

Maintenance Logic
526

Memory
504

Content Items/
Campaigns 528

Keyboard
512

Pointing
Device
514

FIG. 5

Europäisches
Patentamt

European
Patent Office

Office européen
des brevets

# EUROPEAN SEARCH REPORT

Application Number

EP 13 17 1279

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/076980 A1 (DUMITREAN VLADIMIR [US]) 25 March 2010 (2010-03-25) | 1,4-9, 12-14 | INV. G06F17/30 |
| Y | * paragraph [0002] * | 2,10,11, | |
| | * claim 1 * | 15 | |
| A | * figure 2 * | 3 | |
| | ----- | | |
| Y | US 2004/148293 A1 (CROISETTIER RAMANAKUMARI M [US] ET AL) 29 July 2004 (2004-07-29) | 2,10,11, 15 | |
| A | * paragraph [0025] * | 1,3-9, | |
| | * paragraph [0009] - paragraph [0009] * | 12-14 | |
| | ----- | | |

TECHNICAL FIELDS
SEARCHED     (IPC)

G06F

The present search report has been drawn up for all claims

| Place of search | Date of completion of the search | Examiner |
|---|---|---|
| Berlin | 29 August 2013 | Schmidt, Axel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 13 17 1279

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2013

| Patent document cited in search report | Publication date | Patent family member(s) | Publication date |
|---|---|---|---|
| US 2010076980 A1 | 25-03-2010 | US 2010076980 A1<br>US 2013179431 A1 | 25-03-2010<br>11-07-2013 |
| US 2004148293 A1 | 29-07-2004 | NONE | |

EPO FORM P0459

For more details about this annex : see Official Journal of the European Patent Office, No. 12/82